# DEMANDE DE BREVET EUROPEEN

(11) **EP 0 770 814 A1**
(43) Date de publication de la demande: **02.05.1997**
(21) Numéro de dépôt: 96460036.5
(22) Date de dépôt: 24.10.1996
(51) Int. Cl.: F16P 1/02

(54) **Système de protection destiné à être utilisé lors d'opérations de contrôle et/ou de maintenance d'organes contaminés**

(30) Priorité: 25.10.1995 FR 9512823
(71) Demandeur: Securite Bernard Mexia SA, 37002 Tours Cedex (FR)
(72) Inventeur: Dufresne, Guy, 37340 Ambillou (FR); Mexia, Bernard, 37230 Luynes (FR)
(74) Mandataire: Maillet, Alain

(57) **Abrégé**

La présente invention concerne un système de protection destiné à être utilisé lors d'opérations de contrôle et/ou de maintenance d'organes contaminés. Par exemple, il s'agit d'organes implantés dans des centrales nucléaires qui, du fait de leur contact avec le fluide primaire, émettent des rayonnements radioactifs. De tels organes sont par exemple des vannes traversées par le fluide primaire.

Il est constitué, d'une part, d'une structure formée à partir d'éléments verticaux ou montants (11, 12, 13, 14, 100) et d'éléments horizontaux ou traverses (21, 22, 23, 24, 25, 200, 300) fixées sur lesdits montants (11, 12, 13, 14, 100), et, d'autre part, de couvertures de protection (41, 42) pourvues de moyens (31, 32, 33, 34) pour pouvoir être fixées sur lesdites traverses (21, 22, 23, 24, 25, 200, 300) ou sur lesdits montants (11, 12, 13, 14, 100).

## Description

La présente invention concerne un système de protection destiné à être utilisé lors d'opérations de contrôle et/ou de maintenance d'organes contaminés. Par exemple, il s'agit d'organes implantés dans des centrales nucléaires qui, du fait de leur contact avec le fluide primaire, émettent des rayonnements radioactifs. De tels organes sont par exemple des vannes traversées par le fluide primaire.

Généralement, pour effectuer une opération de contrôle ou de maintenance d'un organe contaminé, on procède à son habillage au moyen de couvertures de protection, par exemple des couvertures qui comportent des feuilles de plomb absorbant les rayonnements radioactifs. Ces couvertures sont fixées sur l'organe à protéger au moyen de rubans adhésifs. Une fois l'opération de contrôle ou de maintenance effectuée, on retire les couvertures.

Ce type de protection pose le problème, d'une part, d'une pose longue et fastidieuse et, d'autre part, d'une lente dégradation rendant la protection inefficace avant la fin de l'opération de contrôle ou de maintenance.

Le but de l'invention est donc de proposer un système de protection qui puisse résoudre ces problèmes de pose longue et fastidieuse et de lente dégradation.

Pour ce faire, un système de protection selon l'invention est constitué, d'une part, d'une structure formée à partir d'éléments verticaux ou montants et d'éléments horizontaux ou traverses fixées sur lesdits montants, et, d'autre part, de couvertures de protection pourvues de moyens pour pouvoir être fixées sur lesdites traverses ou sur lesdits montants.

Ainsi, une telle structure est construite autour de l'organe à protéger et est ensuite recouverte desdites couvertures de protection. La mise en place est simplifiée par rapport à l'habillage mentionné ci-dessus et ne se dégrade pas dans le temps. L'avantage d'un tel système de protection réside aussi dans le fait que l'ensemble des éléments qui le constituent peut être réutilisé après une opération de contrôle et de maintenance.

Pour faciliter la mise en place de ladite structure, lesdites traverses sont fixées en des endroits prédéterminés desdits montants par un système de fixation temporaire. L'avantage qui résulte de cette caractéristique, outre la facilité de montage, réside dans le fait qu'à partir du moment où l'on dispose de montants et de traverses en nombre suffisant il est possible de mettre en place une structure selon l'invention sur tout type d'organe, quelle que soit ses dimensions ou sa forme.

L'invention concerne également une structure qui est destinée à être utilisée en tant que système de protection contre les radiations nucléaires émises par un organe sur lequel on désire intervenir dans une opération de contrôle ou de maintenance. Cette structure est constituée de montants sur lesquels sont fixées des traverses.

Afin que cette structure puisse facilement être montée et adaptée à l'organe dont on veut se protéger, lesdits montants sont constitués de cornières dans les ailes desquelles est percée une pluralité de perforations et lesdites traverses comportent des parties d'extrémité planes prévues pour reposer sur les faces externes des ailes desdits montants. Lesdites parties planes sont pourvues d'organes de fixation constitués d'une tige qui est prévue pour se loger dans lesdites perforations et qui est prolongée d'une tête formant butée sur la face interne desdites ailes desdits montants.

Selon une variante d'exécution, lesdites traverses comportent des parties d'extrémité planes prévues pour reposer sur les faces externes des ailes desdits montants, lesdites parties planes étant pourvues d'une perforation, alors que lesdits montants sont constitués de cornières portant une pluralité d'organes de fixation constitués chacun d'une tige qui est prévue pour se loger dans une desdites perforations et qui est prolongée d'une tête formant butée sur la face externe desdites parties planes desdites traverses.

Selon une autre caractéristique de l'invention, lesdites perforations sont constituées d'une première partie laissant passer ladite tête et au moins une autre partie rétrécie par rapport à ladite première partie et ne laissant pas passer ladite tête.

Afin d'offrir une structure stable, chaque traverse est pourvue de moyens qui définissent des plans d'arrêt perpendiculaires à leur direction longitudinale et chaque montant est pourvu de moyens qui définissent des plans d'arrêt parallèles à leur direction longitudinale. Lesdits plans d'arrêt d'une traverse sont prévus pour venir en butée sur lesdits plans d'arrêt d'un montant lorsque ladite traverse est montée sur ledit montant.

Selon une autre caractéristique de l'invention, chaque perforation comporte au moins une face inclinée prévue de manière que, lorsqu'une traverse est montée sur ledit montant ou vice et versa avec leurs plans d'arrêt en butée l'un sur l'autre, la distance auxdits plans d'arrêt du point de contact de la tige d'un organe de fixation avec ladite face inclinée ait tendance à croître lorsqu'on assemble et serre ladite traverse sur ledit montant ou vice et versa.

Selon une autre caractéristique de l'invention, lesdites perforations présentent une seconde face inclinée symétrique de ladite première face inclinée par rapport soit à un axe vertical soit à un axe horizontal. Avantageusement, lesdites perforations présentent une forme de losange présentant un axe de symétrie vertical.

Selon une autre caractéristique de l'invention, des montants sont prévus pour pénétrer et coulisser dans d'autres montants.

Selon une autre caractéristique de l'invention, lesdites traverses sont ajustables en longueur. Pour ce faire, lesdites traverses sont constituées d'au moins deux parties pouvant coulisser l'une par rapport à l'autre. Avantageusement, chaque partie de traverse présente un profil en queue d'aronde dont les dimensions sont prévues pour que ladite partie puisse recevoir ou être reçue par un autre profil en queue d'aronde d'une autre partie de traverse.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:
la Fig. 1 est une vue en perspective d'une structure selon l'invention,
la Fig. 2 est une vue de dessus avec deux sections d'une traverse qui forme une structure selon l'invention,
les Figs. 3a et 3b sont respectivement des coupes selon les plans IIIa/IIIa et IIIb/IIIb d'un système d'assemblage d'une structure selon l'invention,
la Fig. 4 est une vue en perspective d'une traverse montée sur un montant, lequel est équipé d'une rallonge de montant, et
la Fig. 5 est une vue de dessus avec des sections d'une variante de réalisation d'une traverse qui forme une structure selon l'invention.

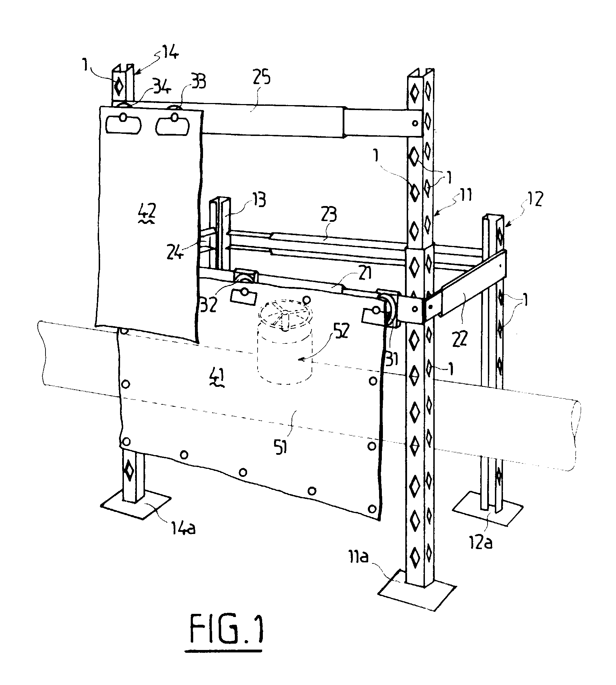

Une structure selon l'invention est représentée à titre d'exemple de réalisation à la Fig. 1. Elle est constituée de quatre montants 11, 12, 13 et 14 formés de cornières sur lesquels sont montées des traverses 21, 22, 23, 24 et 25 formées de barres. Sur la traverse 21, est montée, par l'intermédiaire de moyens appropriés 31, 32 tels que des aimants de forte intensité, une couverture de protection 41. Celle-ci est avantageusement doublée d'une feuille de plomb afin de pouvoir absorber des radiations radioactives. De même, par des moyens appropriés 33 et 34 tels que là aussi des aimants de forte intensité, est fixée, sur la traverse 25, une autre couverture de protection 42.

Les montants 11 à 14 comportent, à leurs extrémités inférieures, des semelles lla à 14a afin que la structure puisse reposer de manière stable sur le sol.

Afin de bien fixer les idées, on a représenté, en traits fins, une canalisation 51 et, derrière la couverture 41, une vanne 52 sur laquelle on désire effectuer une opération de contrôle et de maintenance. on comprendra que pour pouvoir se protéger de cette vanne 52, il faut disposer d'un nombre de couvertures de protection supérieur à celui qui est représenté, ces couvertures étant alors disposées tout autour de ladite vanne 52. Si toutes ces couvertures n'ont pas été représentées, c'est uniquement dans un souci de lisibilité de la Fig. 1.

on peut remarquer dès à présent que le montant 11 est en réalité constitué d'un montant inférieur 11b et d'une rallonge de montant 11c prévue pour pouvoir pénétrer dans le montant inférieur 11b et s'y fixer. Il en est de même du montant 14.

Comme on le verra plus en détail dans la suite de la description, les traverses 21 à 25 sont constituées de deux parties dont l'une peut coulisser par rapport à l'autre.

Lesdites traverses 21 à 25 sont fixées temporairement en des endroits prédéterminés desdits montants 11 à 14, c'est-à-dire là où se trouvent à cet effet des perforations 1. Chaque traverse 21, 22, 23, 24, 25 peut donc être montée sur un montant 11, 12, 13, 14 à un endroit désiré qui dépend des dimensions et de la forme de l'organe 52 dont on veut protéger.

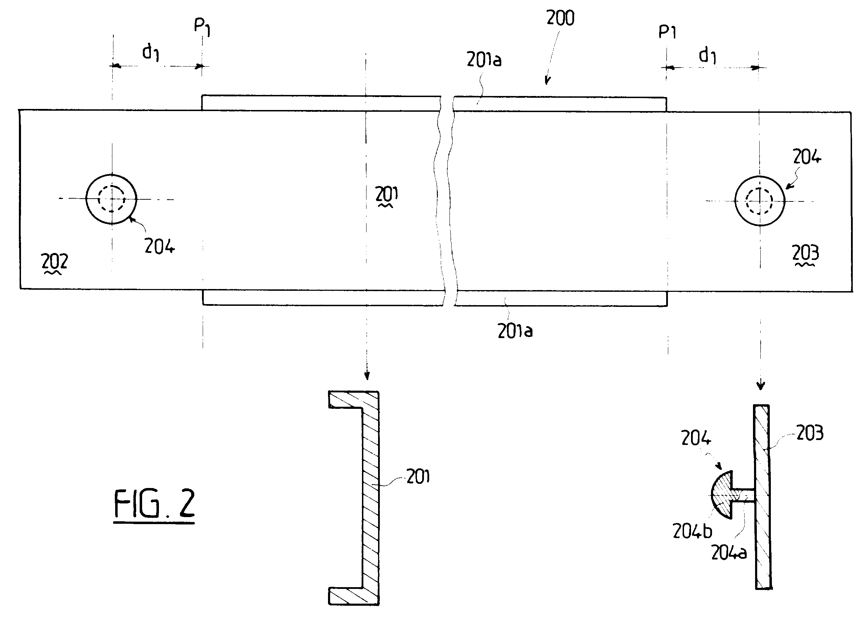

on a représenté à la Fig. 2 une vue de dessus d'une traverse 200 ainsi que deux sections de cette traverse. Ladite traverse 200 présente une partie 201 de section en forme de "U" avec des ailes 201a dont les extrémités constituent respectivement des plans d'arrêt P1 qui sont perpendiculaires à la direction longitudinale de la traverse 200. De chaque côté de la partie 201, la traverse 200 est pourvue de deux parties d'extrémité planes 202 et 203 sur chacune desquelles est monté un organe de fixation 204. Chaque organe de fixation 204 est pourvu, d'une part, d'une tige cylindrique 204a qui fait saillie sur la face de la traverse 200 se trouvant du côté des ailes 201a, sensiblement perpendiculairement à celle-ci et, d'autre part, d'une tête 204b prolongeant ladite tige 204a. L'axe de chaque organe de fixation 204 est à une distance déterminée dl du plan d'arrêt P1 du même côté.

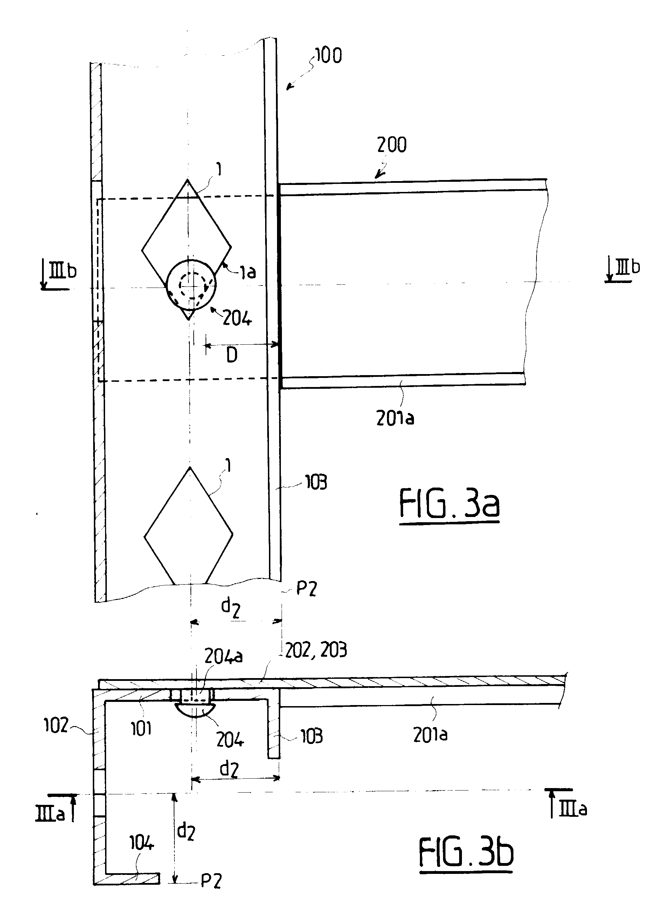

Aux Figs. 3a et 3b, on a représenté une partie d'un montant 100 sur lequel est montée une traverse 200. Le montant 100 est constitué d'un profilé en forme de cornière dont chaque aile 101, 102 est prolongée par un rabat 103, 104 à 90°. Chaque rabat 103, 104 définit ainsi un plan d'arrêt P2 qui se trouve donc être perpendiculaire à l'aile 101, 102 correspondante. De même, la face externe de chaque aile 101, 102 définit un plan d'arrêt P2. Chaque aile 101, 102 est pourvue de perforations 1 en forme de losange dont les axes longitudinaux sont parallèles aux plans d'arrêt P2 et se superposent à l'axe de symétrie longitudinal de chaque aile 101, 102. Pour le besoin de la description, on précisera que la largeur de chaque aile 101, 102 est égale à 2 x d2 si bien que les axes longitudinaux desdites perforations sont à une distance déterminée d2 desdits plans P2.

Comme on peut le voir sur les Figs. 3a et 3b, une traverse 200 est montée sur un montant 100 de manière, d'une part, que l'organe 204 soit introduit dans un perforation 1 et, d'autre part, que les extrémités des ailes 201a reposent sur un des rabats 103, 104 (ou sur une des ailes 101, 102) afin que le plan d'arrêt P1 de la traverse 200 soit contre un plan P2 du montant, les plans P1 et P2 se superposant alors. La partie cylindrique 204a de l'organe 204 repose dans le fond de la perforation 1 alors que la tête 204b forme une butée empêchant la traverse de sortir de la perforation 1.

Pour permettre le montage d'une traverse 200 sur un montant 100, les perforations 1 sont constituées d'une première partie, au centre du losange, laissant passer la tête 204b et au moins une autre partie, dans les parties basse et haute du losange, ne laissant pas passer ladite tête 204b.

Selon une caractéristique de l'invention, les distances dl et d2 sont telles que la distance dl est inférieure à la distance d2. Ainsi, la partie cylindrique 204a repose sur une seule face la de la perforation 1 en forme de losange. Cette face la est inclinée de manière que, lorsqu'une traverse 200 est montée sur un montant 100 avec leurs plans d'arrêt P1 et p2 en butée l'un sur l'autre, la distance D aux plans d'arrêt P1 et P2 du point de contact de la tige 204a d'un organe de fixation 204 avec la face la ait tendance à croître lorsqu'on assemble et serre ladite traverse 200 sur ledit montant 100. Il en résulte que plus la charge sur la traverse 200 est importante et plus le serrage, au niveau des plans d'arrêt Pl et P2, de la traverse 200 sur le montant 100 est fort.

on notera que la face la est linéaire mais qu'elle pourrait ne pas l'être.

D'ailleurs, la forme de losange a avantageusement été choisie car elle possède les propriétés suivantes. D'abord, elle présente une face la inclinée telle que cela a été définie ci-dessus. Ensuite, elle présente une face 1b symétrique de la face la par rapport à son axe vertical, ce qui permet le montage d'une traverse 200 d'un côté ou de l'autre d'une même aile 101, 102 du montant 100. Enfin, elle présente une symétrie par rapport à un axe horizontal, ce qui autorise le montage d'une traverse 200 chargée sur un montant 100 fixe et stable ou au contraire le montage d'un montant 100 chargé sur une traverse 200 fixe et stable. Dans le premier cas, c'est l'organe 204 de la traverse 200 qui repose dans le fond de la perforation 1 du montant 100 alors que dans le second cas, c'est la partie haute de la perforation 1 qui repose sur la partie cylindrique 204a de l'organe 204 de la traverse 200.

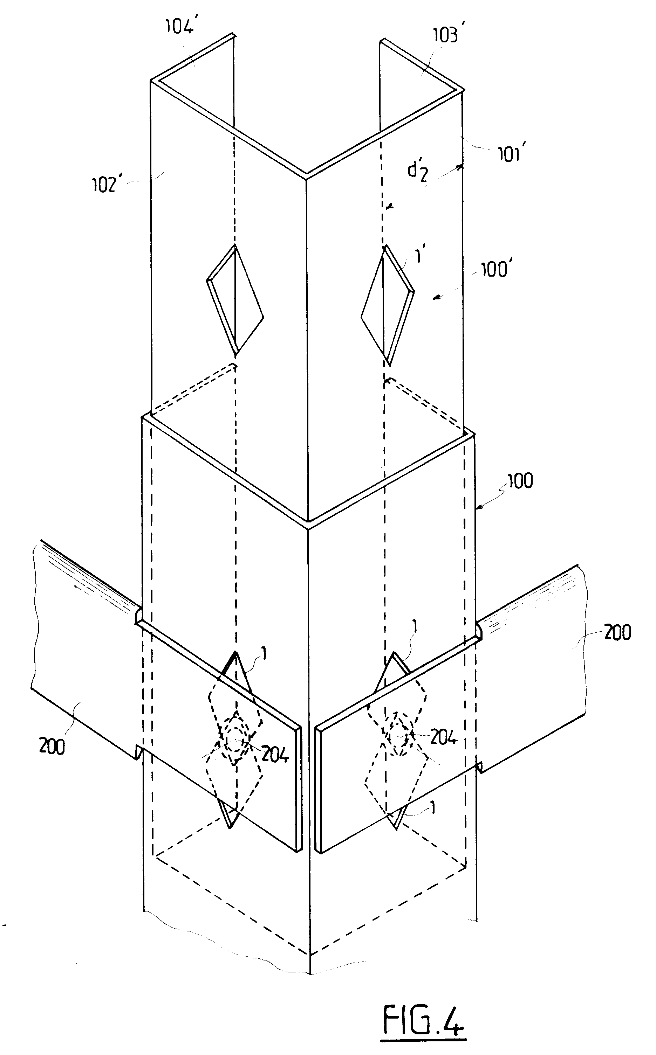

on a représenté à la Fig. 4, un montant 100 sur lequel sont montées, comme il vient d'être exposé, deux traverses 200. Une rallonge de montant 100', de structure identique à celle d'un montant 100, a cependant des dimensions prévues pour qu'elle puisse être montée à l'intérieur d'un montant 100. La rallonge 100' est également pourvue sur ses ailes 101' et 102' de perforations 1' en forme de losange. Comme on peut le constater, chaque organe 204 des traverses 200 repose dans le fond d'un perforation 1 du montant 100 et la partie supérieure d'une perforation 1' repose sur la partie cylindrique 204a d'un organe 204.

Les perforations 1' en forme de losange ont leur axe de symétrie vertical à une distance d'2 des rabats 103', 104' ou de l'aile 102' définissant des plans d'arrêt P2, laquelle distance d'2 est également supérieure à la distance d1.

On comprendra que l'invention n'est pas limitée à des perforations 1 en forme de losange mais qu'elle englobe les cas où les perforations 1 ne comportent qu'une surface inclinée la telle que définie ci-dessus, ou encore une surface inclinée la et une autre surface symétrique à celle-ci soit par rapport à un axe vertical soit par rapport à un axe horizontal. Bien sûr, les possibilités de montage d'une traverse 200 sur un montant 100 seraient plus réduites dans ces cas, que dans le cas où la forme de losange des perforations 1 est adoptée.

on notera aussi qu'un mode de réalisation qui entre également dans le cadre de la présente invention est celui pour lequel ce sont les parties planes d'extrémité 202 et 203 de chaque traverse 200 qui sont pourvues d'une perforation 1 et chaque montant 100 qui porte une pluralité d'organes de fixation.

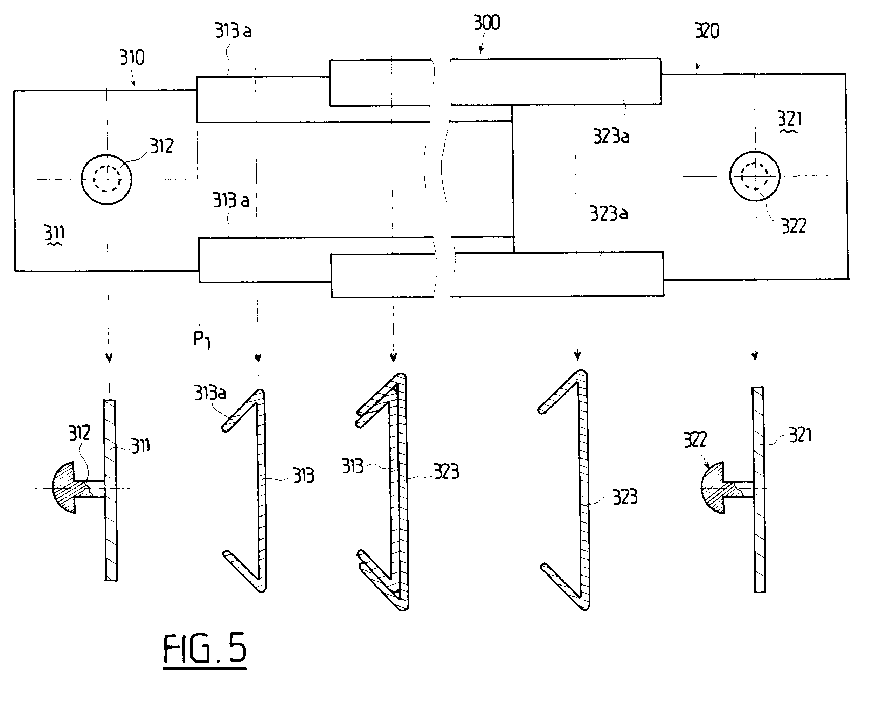

on a représenté à la Fig. 5 une traverse 300 qui présente la particularité d'être ajustable en longueur. Pour ce faire, elle est constituée de deux parties 310 et 320, la partie 310 pouvant coulisser à l'intérieur de la partie 320. La partie 310 comporte une partie plane 311 pourvue d'un organe 312 et une partie 313 en forme de queue d'aronde avec deux ailes 313a inclinées. Les extrémités des ailes 313a définissent, à l'instar du mode de réalisation représenté à la Fig. 2, un premier plan d'arrêt P1 perpendiculaire à la direction longitudinale de la traverse 300. La partie 320 comporte elle aussi une partie plane 312 pourvue d'un organe 322 et d'une partie 323 en forme de queue d'aronde avec deux ailes 323a inclinées. Les extrémités des ailes 323a définissent un second plan d'arrêt P1. Les dimensions des parties 313 et 323 sont respectivement prévues pour que lesdites parties 313 et 323 puissent coulisser l'une par rapport à l'autre.

Les organes 322 et 312 ont la même fonction que les organes 204 du mode de réalisation représenté à la Fig.2 Il en est de même des plans d'arrêt P1.

on peut voir l'effet d'un tel coulissement sur les traverses 21 et 23 de la Fig. 1 qui sont étendues par rapport aux traverses 22 et 24.

on comprendra que lesdites traverses 200 pourraient être constituées de plus de deux parties pouvant coulisser les unes par rapport aux autres. Dans ce cas, chaque partie de traverse 300 présente un profil en queue d'aronde dont les dimensions sont prévues pour que ladite partie puisse recevoir ou être reçue par un autre profil en queue d'aronde d'une autre partie de traverse 300.

## Revendications

1. Système de protection destiné à être utilisé lors d'opérations de contrôle et/ou de maintenance d'organes (51, 52) contaminés, ledit système étant constitué, d'une part, d'une structure formée à partir d'éléments verticaux ou montants (11, 12, 13, 14, 100) et d'éléments horizontaux ou traverses (21, 22, 23, 24, 25, 200, 300) fixées sur lesdits montants (11, 12, 13, 14, 100), et, d'autre part, de couvertures de protection (41, 42) pourvues de moyens (31, 32, 33, 34) pour pouvoir être fixées sur lesdites traverses (21, 22, 23, 24, 25, 200, 300) ou sur lesdits montants (11, 12, 13, 14, 100), caractérisé en ce que chaque traverse (21, 22, 23, 24, 25, 200, 300) est fixée par un système de fixation temporaire en un endroit de l'un desdits montants (11, 12, 13, 14, 100) qui est prédéterminé parmi plusieurs endroits.

2. Structure destinée à être utilisée en tant que système de protection selon la revendication 1, ladite structure étant constituée de montants (11, 12, 13, 14, 100) sur lesquels sont fixées des traverses (21, 22, 23, 24, 25, 200, 300), caractérisée en ce que chaque traverse (21, 22, 23, 24, 25, 200, 300) est fixée par un système de fixation temporaire en un endroit de l'un desdits montants (11, 12, 13, 14, 100) qui est prédéterminé parmi plusieurs endroits, lesdites traverses (21, 22, 23, 24, 25, 200, 300) étant ajustables en longueur.

3. Structure selon la revendication 2, caractérisée en ce que lesdites traverses (21, 22, 23, 24, 25, 200, 300) sont constituées d'au moins deux parties pouvant coulisser l'une par rapport l'autre.

4. Structure selon la revendication 3, caractérisée en ce que chaque partie de traverse (21, 22, 23, 24, 25, 200, 300) présente un profil en queue d'aronde dont les dimensions sont prévues pour que ladite partie puisse recevoir ou être reçue par un autre profil en queue d'aronde d'une autre partie de traverse (21, 22, 23, 24, 25, 200, 300).

5. Structure selon une des revendications 2, 3 ou 4, caractérisée en ce que lesdits montants (11, 12, 13, 14, 100) sont constitués de cornières dans les ailes (101, 102, 101', 102') desquelles est percée une pluralité de perforations (1, 1') et en ce que lesdites traverses (21, 22, 23, 24, 25, 200, 300) comportent des parties d'extrémité planes (202, 203, 312, 311) prévues pour reposer sur les faces externes des ailes (101, 102, 101', 102') desdits montants (11, 12, 13, 14, 100), lesdites parties planes (202, 203, 312, 311) étant pourvues d'organes de fixation (204, 312, 322) constitués d'une tige (204a) qui est prévue pour se loger dans lesdites perforations (1) et qui est prolongée d'une tête (204b) formant butée sur la face interne desdites ailes (101, 102, 101', 102') desdits montants (11, 12, 13, 14, 100).

6. Structure selon une des revendications 2, 3 ou 4, caractérisée en ce que lesdites traverses (21, 22, 23, 24, 25, 200, 300) comportent des parties d'extrémité planes (202, 203, 312, 311) prévues pour reposer sur les faces externes des ailes desdits montants (11, 12, 13, 14, 100), lesdites parties planes (202, 203, 312, 300) étant pourvues d'une perforation, et en ce que lesdits montants (11, 12, 13, 14, 100) sont constitués de cornières portant une pluralité d'organes de fixation constitués chacun d'une tige qui est prévue pour se loger dans une desdites perforations et qui est prolongée d'une tête formant butée sur la face externe desdites parties planes desdites traverses (21, 22, 23, 24, 25, 200, 300).

7. Structure selon une des revendications 2 à 6, caractérisée en ce que lesdites perforations (1, 1') sont constituées d'une première partie laissant passer ladite tête (204b) et au moins une autre partie rétrécie par rapport à ladite première partie et ne laissant pas passer ladite tête (204b).

8. Structure selon la revendication 7, caractérisée en ce que chaque perforation (1, 1') comporte au moins une face inclinée (1a) prévue de manière que, lorsqu'une traverse (21, 22, 23, 24, 25, 200, 300) est montée sur un montant (11, 12, 13, 14, 100) ou vice et versa avec leurs plans d'arrêt (P1, P2) en butée l'un sur l'autre, la distance (D) auxdits plans d'arrêt (P1 et P2) du point de contact de la tige (204a) d'un organe de fixation (204, 312, 322) avec ladite face inclinée (la) ait tendance à croître lorsqu'on assemble et serre ladite traverse (21, 22, 23, 24, 25, 200, 300) sur ledit montant (11, 12, 13, 14, 100) ou vice et versa.

9. Structure selon la revendication 8, caractérisée en ce que lesdites perforations (1, 1') présentent une seconde face inclinée symétrique de ladite première face inclinée (1a) par rapport soit à un axe vertical soit à un axe horizontal.

10. Structure selon la revendication 9, caractérisé en ce que lesdites perforations (1, 1') présentent une forme de losange présentant un axe de symétrie vertical.

11. Structure selon une des revendications 2 à 10, caractérisée en ce que chaque traverse (21, 22, 23, 24, 25, 200, 300) est pourvue de moyens qui définissent des plans d'arrêt (P1) perpendiculaires à leur direction longitudinale, et en ce que chaque montant (11, 12, 13, 14, 100) est pourvu de moyens qui définissent des plans d'arrêt (P2) parallèles à leur direction longitudinale, lesdits plans d'arrêt (P1) d'une traverse (21, 22, 23, 24, 25, 200, 300) étant prévus pour venir en butée sur lesdits plans d'arrêt (P2) d'un montant (11, 12, 13, 14, 100) lorsque ladite traverse (21, 22, 23, 24, 25, 200, 300) est montée sur ledit montant (11, 12, 13, 14, 100).

12. Structure selon une des revendications 2 à 11, caractérisée en ce que lesdits montants (11, 12, 13, 14, 100) comportent des rallonges de montants (100') de structure identique auxdits montants (100) mais qui sont prévues pour pénétrer et coulisser dans lesdits montants (11, 12, 13, 14, 100).
